# EUROPEAN PATENT APPLICATION

(11) **EP 4 546 619 A1**
(43) Date of publication of application: **30.04.2025**
(21) Application number: 24761153.6
(22) Date of filing: 30.08.2024
(51) Int. Cl.: H02K 7/06, H02K 1/34, H02K 23/44, H02K 23/54, H02K 1/04, B06B 1/06, H04M 19/04, G06F 3/01

(54) **MOTOR STRUCTURE AND ELECTRONIC DEVICE COMPRISING SAME**

(30) Priority: 30.08.2023 KR 20230114659; 18.10.2023 KR 20230139860
(71) Applicant: Samsung Electronics Co., Ltd., Suwon-si, Gyeonggi-do 16677 (KR)
(72) Inventor: KIM, Joosung, Suwon-si, Gyeonggi-do 16677 (KR); NA, Hyoseok, Suwon-si, Gyeonggi-do 16677 (KR); KIM, Sanguk, Suwon-si, Gyeonggi-do 16677 (KR); HWANG, Ryuwon, Suwon-si, Gyeonggi-do 16677 (KR)
(74) Representative: Nederlandsch Octrooibureau
(86) International application number: PCT/KR2024/013063
(87) International publication number: WO 2025/048549

(57) **Abstract**

A motor structure according to an embodiment of the disclosure may comprise a shaft, a hollow magnet formed around the shaft, and a rotatable part configured to rotate about the shaft and including a first area and a second area, which is a remaining area other than the first area, divided with respect to the shaft. The rotatable part may include a coil configured to generate an electromagnetic force through interaction with the magnet, a counter weight positioned in the first area and having a first weight, and a metal member at least partially positioned in the second area and having a second weight smaller than the first weight.

## Description

### [Technical Field]

An embodiment of the disclosure relates to a motor structure and an electronic device including the same.

### [Background Art]

Advancing information communication technologies and semiconductor technologies accelerate the spread and use of various electronic devices. Recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions.

One necessary function for electronic devices is a call receiving function. Types of such call receiving function include a function of sounding out, e.g., a melody or a bell sound or a vibration function that vibrates the electronic device. It is applied to implement a vibration function for silent call in personal information communication devices such as mobile communication terminals. Demand for such flat vibration motors is increasing as they are used as vibration means for mobile communication terminals.

### [Disclosure of Invention]

### [Solution to Problems]

A motor structure according to an embodiment may comprise a shaft defining a rotation axis, a ring-shaped magnet including an opening through which the shaft passes, and a rotatable part configured to rotate about the shaft, and including a first area and a second area divided with respect to a reference line intersecting the rotation axis. The rotatable part may include a coil assembly configured to generate an electromagnetic force through interaction with the magnet, a counter weight positioned in the first area and having a first weight, and a metal member at least partially positioned in the second area and having a second weight smaller than the first weight.

An electronic device according to an embodiment may comprise a housing including a conductive portion and a motor structure disposed in the housing and disposed to at least partially overlap the conductive portion. The motor structure may comprise a shaft defining a rotation axis, a ring-shaped magnet including an opening through which the shaft passes, and a rotatable part configured to rotate about the shaft, and divided into a first area and a second area with respect to a reference line intersecting the rotation axis. The rotatable part may include a coil assembly configured to generate an electromagnetic force through interaction with the magnet, a counter weight positioned in the first area and having a first weight, and a metal member at least partially positioned in the second area and having a second weight smaller than the first weight.

### [Brief Description of Drawings]

FIG. 1 is a block diagram illustrating an electronic device in a network environment according to an embodiment of the disclosure;
FIG. 2 is a front perspective view illustrating an electronic device according to an embodiment of the disclosure;
FIG. 3 is a rear perspective view illustrating the electronic device of FIG. 2 according to an embodiment of the disclosure;
FIG. 4A is a front exploded perspective view illustrating the electronic device of FIG. 2 according to an embodiment of the disclosure;
FIG. 4B is a rear exploded perspective view illustrating the electronic device of FIG. 2 according to an embodiment of the disclosure;
FIG. 5 is an exploded perspective view illustrating a motor structure according to an embodiment of the disclosure;
FIG. 6 is a view illustrating a rotatable part of a motor structure according to an embodiment of the disclosure, as viewed upward;
FIG. 7 is a view illustrating a rotatable part of a motor structure according to an embodiment of the disclosure, as viewed downward;
FIG. 8 is a perspective view illustrating a rotatable part of a motor structure according to an embodiment of the disclosure, as viewed from a side;
FIG. 9 is a cross-sectional view illustrating the rotatable part of the motor structure of FIG. 8, taken along line A-A', according to an embodiment of the disclosure;
FIG. 10 is a view illustrating a rotatable part of a motor structure according to an embodiment of the disclosure, as viewed upward;
FIG. 11 is a perspective view illustrating a rotatable part of a motor structure according to an embodiment of the disclosure, as viewed from a side;
FIG. 12 is a cross-sectional view illustrating the rotatable part of the motor structure of FIG. 11, taken along line A-A', according to an embodiment of the disclosure;
FIG. 13 is a view illustrating a rotatable part of a motor structure according to an embodiment of the disclosure, as viewed upward;
FIG. 14 is a perspective view illustrating the rotatable part of the motor structure of FIG. 13 according to an embodiment of the disclosure, as viewed from a side;
FIG. 15 is a cross-sectional view illustrating the rotatable part of the motor structure of FIG. 14, taken along line A-A', according to an embodiment of the disclosure;
FIG. 16 is a view illustrating a rotatable part of a motor structure according to an embodiment of the disclosure, as viewed upward;
FIG. 17 is a perspective view illustrating the rotatable part of the motor structure of FIG. 16 according to an embodiment of the disclosure, as viewed from a side;
FIG. 18 is a cross-sectional view illustrating the rotatable part of the motor structure of FIG. 17, taken along line A-A', according to an embodiment of the disclosure;
FIG. 19 is a view illustrating a rotatable part of a motor structure according to an embodiment of the disclosure, as viewed upward;
FIG. 20 is a perspective view illustrating the rotatable part of the motor structure of FIG. 19 according to an embodiment of the disclosure, as viewed from a side;
FIG. 21 is a cross-sectional view illustrating the rotatable part of the motor structure of FIG. 20, taken along line A-A', according to an embodiment of the disclosure;
FIG. 22 is a view illustrating a rotatable part of a motor structure according to an embodiment of the disclosure, as viewed upward;
FIG. 23 is a perspective view illustrating the rotatable part of the motor structure of FIG. 22 according to an embodiment of the disclosure, as viewed from a side; and
FIG. 24 is a cross-sectional view illustrating the rotatable part of the motor structure of FIG. 23, taken along line A-A', according to an embodiment of the disclosure.

### [Mode for the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

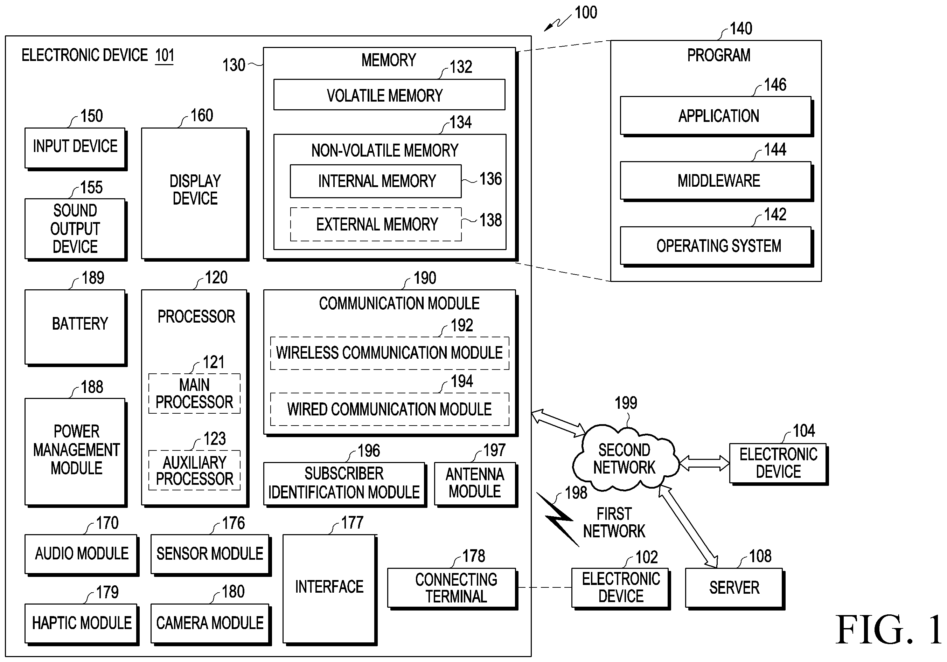

FIG. 1 is a block diagram illustrating an electronic device in a network environment according to an embodiment of the disclosure;
Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in nonvolatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

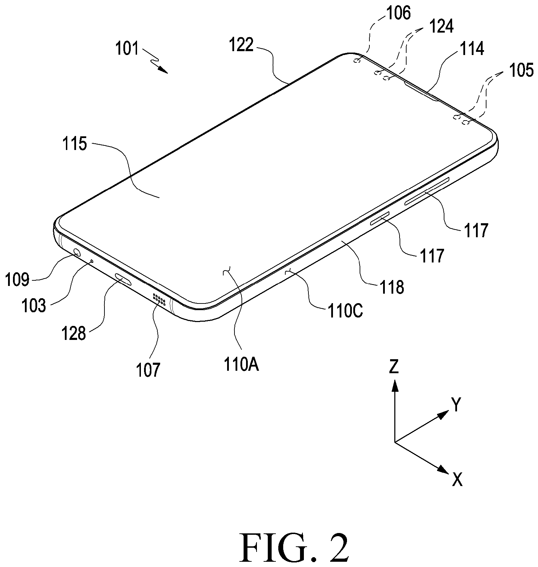

FIG. 2 is a front perspective view illustrating an electronic device 101 according to an embodiment of the disclosure.

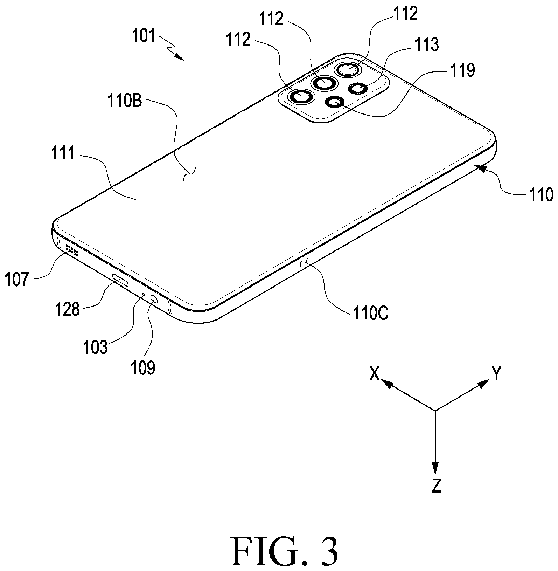

FIG. 3 is a rear perspective view illustrating the electronic device 101 of FIG. 2 according to an embodiment of the disclosure.

Referring to FIGS. 2 and 3, according to an embodiment, an electronic device 101 (e.g., the electronic device 101 of FIG. 1) may include a housing 110 including a first surface (or front surface) 110A, a second surface (or rear surface) 110B, and a side surface 110C surrounding a space between the first surface 110A and the second surface 110B. According to an embodiment (not shown), the housing 110 may denote a structure forming the first surface 110A of FIG. 2, the second surface 110B of FIG. 3, and some of the side surfaces 110C.

According to an embodiment, at least part of the first surface 110A may have a substantially transparent front plate 122 (e.g., a glass plate or polymer plate including various coat layers). The second surface 110B may be formed of a substantially opaque rear plate 111. The rear plate 111 may be formed of, e.g., laminated or colored glass, ceramic, polymer, metal (e.g., aluminum, stainless steel (STS), or magnesium), or a combination of at least two thereof. The side surface 110C may be formed by a side structure (or a "side bezel structure") 118 that couples to the front plate 122 and the rear plate 111 and includes a metal and/or polymer. In an embodiment, the rear plate 111 and the side structure 118 may be integrally formed together and include the same material (e.g., a metal, such as aluminum).

According to an embodiment, the front plate 122 may include area(s) that bend from at least a portion of an edge toward the rear plate 111 and seamlessly extend. For example, only one of the areas of the front plate 122 (or the rear plate 111), which bend to the rear plate 111 (or front plate 122) and extend may be included in one edge of the first surface 110A. According to an embodiment, the front plate 122 or rear plate 111 may be substantially flat and, in this case, may not include an area bending and extending. When an area bending and extending is included in the front plate 122 or rear plate 111, the thickness of the electronic device 101 at the portion including the area bending and extending may be smaller than the thickness of the rest.

According to an embodiment, the electronic device 101 may include at least one of a display 115, an audio module (e.g., the microphone hole 103, the external speaker hole 107, and the phone receiver hole 114), a sensor module (e.g., the first sensor module 124, the second sensor module (not illustrated), or the third sensor module 119), a camera module (e.g., the first camera device 105, the second camera device 112, or the flash 113), a key input device 117, a light emitting device 106, and a connector hole (e.g., the first connector hole 128 or the second connector hole 109). In an embodiment, the electronic device 101 may exclude at least one (e.g., the key input device 117 or the light emitting device 106) of the components or may add other components.

The display 115 may output a screen or be visually exposed through a significant portion of the first surface 110A (e.g., the front plate 122), for example. In an embodiment, at least a portion of the display 115 may be visually exposed through the front plate 122 forming the first surface 110A, or through a portion of the side surface 110C. In an embodiment, the edge of the display 115 may be formed to be substantially the same in shape as an adjacent outer edge of the front plate 122. In an embodiment (not illustrated), the interval between the outer edge of the display 115 and the outer edge of the front plate 122 may remain substantially even to give a larger area of visual exposure of the display 115.

According to an embodiment, a recess or an opening may be formed in a portion of the screen display area of the display 115, and there may be included at least one of an audio module (e.g., the phone receiver hole 114), a sensor module (e.g., the first sensor module 124), a camera module (e.g., the first camera device 105), and a light emitting device 106 that are aligned with the recess or the opening. In an embodiment (not shown), at least one of the audio module (e.g., the phone receiver hole 114), sensor module (e.g., the first sensor module 124), camera module (e.g., the first camera device 105), fingerprint sensor (not shown), and light emitting device 106 may be included on the rear surface of the screen display area of the display 115. In an embodiment (not illustrated), the display 115 may be disposed to be coupled with, or adjacent, a touch detecting circuit, a pressure sensor capable of measuring the strength (pressure) of touches, and/or a digitizer for detecting a magnetic field-type stylus pen.

According to an embodiment, the audio modules 103, 107, and 114 may include a microphone hole 103 and speaker holes (e.g., the external speaker hole 107 and the phone receiver hole 114). A microphone for acquiring external sounds may be disposed in the microphone hole 103. In an embodiment, a plurality of microphones may be disposed to detect the direction of the sound. The speaker holes may include an external speaker hole 107 and a phone receiver hole 114. According to an embodiment, the speaker holes (e.g., the external speaker hole 107 and the phone receiver hole 114) and the microphone hole 103 may be implemented as a single hole, or speakers may be included without the speaker holes (e.g., the external speaker hole 107 and the phone receiver hole 114) (e.g., piezo speakers).

According to an embodiment, the sensor module may generate an electrical signal or data value corresponding to an internal operating state or external environmental state of the electronic device 101. The sensor modules may include a first sensor module 124 (e.g., a proximity sensor) and/or a second sensor module (not shown) (e.g., a fingerprint sensor) disposed on the first surface 110A of the housing 110 and/or a third sensor module 119 disposed on the second surface 110B of the housing 110. The second sensor module (not shown) (e.g., a fingerprint sensor) may be disposed on the second surface 110B or side surface 110C as well as the first surface 110A (e.g., the display 115) of the housing 110. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 124.

According to an embodiment, the camera modules may include a first camera device 105 disposed on the first surface 110A of the electronic device 101, and a second camera device 112 and/or a flash 113 disposed on the second surface 110B. The camera devices (e.g., the first camera device 105 and the second camera device 112) may include one or more lenses, an image sensor, and/or an image signal processor. The flash 113 may include, e.g., a light emitting diode or a xenon lamp. In an embodiment, one or more lenses (an infrared (IR) camera, a wide-angle lens, and a telephoto lens) and image sensors may be disposed on one surface of the electronic device 101. In an embodiment, flash 113 may emit infrared light. The infrared light emitted by the flash 113 and reflected by the subject may be received through the third sensor module 119. The electronic device 101 or the processor (e.g., the processor 120 of FIG. 1) of the electronic device 101 may detect depth information about the subject based on the time point when the infrared light is received from the third sensor module 119.

According to an embodiment, the key input device 117 may be disposed on the side surface 110C of the housing 110. In an embodiment, the electronic device 101 may exclude all or some of the above-mentioned key input devices 117 and the excluded key input devices 117 may be implemented in other forms, e.g., as soft keys, on the display 115. In an embodiment, the key input device may include the sensor module disposed on the second surface 110B of the housing 110.

According to an embodiment, the light emitting device 106 may be disposed on the first surface 110A of the housing 110, for example. The light emitting device 106 may provide, e.g., information about the state of the electronic device 101 in the form of light. In an embodiment, the light emitting device 106 may provide a light source that interacts with, e.g., the camera module (e.g., the first camera device 105). The light emitting device 106 may include, e.g., a light emitting diode (LED), an infrared (IR) LED, or a xenon lamp.

According to an embodiment, the connector holes (e.g., the first connector hole 128 or the second connector hole 109) may include, e.g., a first connector hole 128 for receiving a connector (e.g., a USB connector) for transmitting/receiving power and/or data to/from an external electronic device (e.g., the electronic device 1002 of FIG. 1) and/or a second connector hole 109 (e.g., an earphone jack) for receiving a connector for transmitting/receiving audio signals to/from the external electronic device.

The directions X, Y, and Z may designate axes of a Cartesian coordinate system. So, the X-direction is perpendicular to the Y-direction and to the Z-direction. The Y-direction is perpendicular to the X-direction and to the Z-direction. The Z-direction is perpendicular to the X-direction and to the Y-direction.

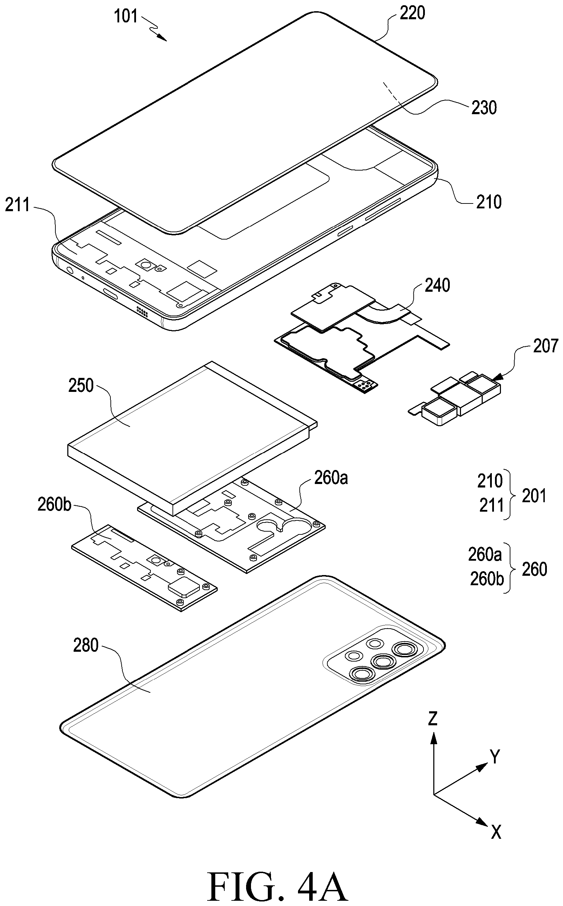

FIG. 4A is a front exploded perspective view illustrating the electronic device 101 of FIG. 2 according to an embodiment of the disclosure.

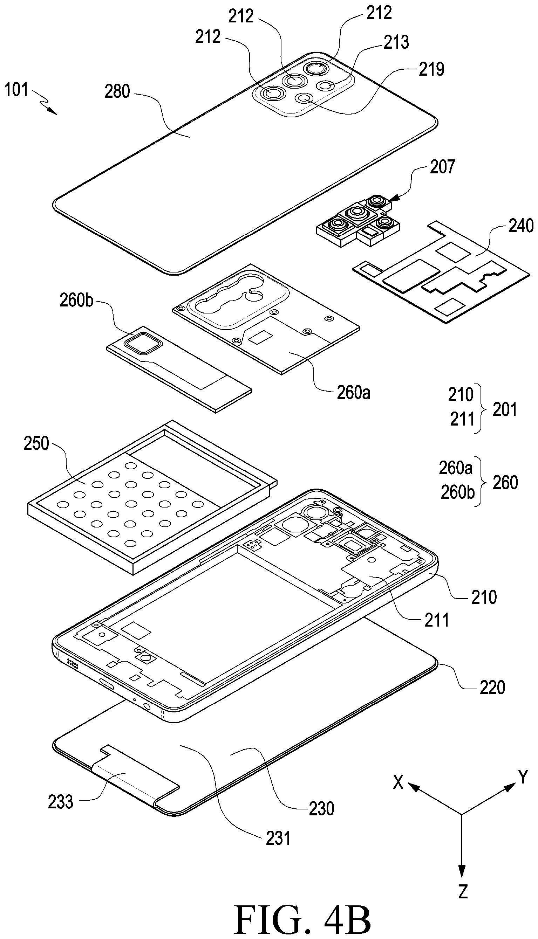

FIG. 4B is a rear exploded perspective view illustrating the electronic device 101 of FIG. 2 according to an embodiment of the disclosure.

Referring to FIGS. 4A and 4B, an electronic device 101 (e.g., the electronic device 101 of FIG. 1, 2, or 3) may include a side structure 210, a first supporting member 211 (e.g., a bracket), a front plate 220 (e.g., the front plate 122 of FIG. 2), a display 230 (e.g., the display 115 of FIGS. 2 and 3), a printed circuit board (or a board assembly) 240, a battery 250, a second supporting member 260 (e.g., a rear case), an antenna, a camera assembly 207, and a rear plate 280 (e.g., the rear plate 111 of FIG. 3).

According to an embodiment, the electronic device 101 may exclude at least one (e.g., the first supporting member 211 or the second supporting member 260) of the components or may add other components. At least one of the components of the electronic device 101 may be the same or similar to at least one of the components of the electronic device 101 of FIG. 2 or 3 and no duplicate description is made below.

According to an embodiment, the first supporting member 211 may be disposed inside the electronic device 101 to be connected with the side structure 210 or integrated with the side structure 210. The first supporting member 211 may be formed of, e.g., a metal and/or non-metallic material (e.g., polymer). When at least partially formed of a metallic material, a portion of the side structure 210 or the first supporting member 211 may function as an antenna. The display 230 may be joined onto one surface of the first supporting member 211, and the printed circuit board 240 may be joined onto the opposite surface of the first supporting member 232. A processor (e.g., the processor 120 of FIG. 1), memory (e.g., the memory 130 of FIG. 1), and/or an interface (e.g., the interface 177 of FIG. 1) may be mounted on the printed circuit board 240. The processor may include one or more of, e.g., a central processing unit, an application processor, a graphic processing device, an image signal processing, a sensor hub processor, or a communication processor.

According to an embodiment, the first supporting member 211 and the side structure 210 may be collectively referred to as a front case or a housing 201. According to an embodiment, the housing 201 may be generally understood as a structure for receiving, protecting, or disposing the printed circuit board 240 or the battery 250. In an embodiment, the housing 201 may be understood as including a structure that the user may visually or tactfully recognize from the exterior of the electronic device 101, e.g., the side structure 210, the front plate 220, and/or the rear plate 280. In an embodiment, the 'front or rear surface of the housing 201' may mean the first surface 110A of FIG. 2 or the second surface 110B of FIG. 3. In an embodiment, the first supporting member 211 may be disposed between the front plate 220 (e.g., the first surface 110A of FIG. 2) and the rear plate 280 (e.g., the second surface 110B of FIG. 3) and may function as a structure for placing an electrical/electronic component, such as the printed circuit board 240 or the camera assembly 207.

According to an embodiment, the display 230 may include a display panel 231 and a flexible printed circuit board 233 extending from the display panel 231. It may be understood that the flexible printed circuit board 233 is, e.g., electrically connected to the display panel 231 while at least partially disposed on the rear surface of the display panel 231. In an embodiment, reference number '231' may be understood as a protective sheet disposed on the rear surface of the display panel. For example, the protective sheet may be understood as a portion of the display panel 231 unless otherwise designated in the detailed description below. In an embodiment, the protective sheet may function as a cushioning structure that absorbs external force (e.g., a low-density elastic material, such as a sponge) or an electromagnetic shielding structure (e.g., a copper sheet (CU sheet)). According to an embodiment, the display 230 may be disposed on the inner surface of the front plate 220 and, by including a light emitting layer, output a screen through at least a portion of the front plate 220 or the first surface 110A of FIG. 2. As mentioned above, the display 230 may output substantially the entire area of the front plate 220 or the first surface 110A of FIG. 2.

According to an embodiment, the memory may include, e.g., a volatile or nonvolatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the second supporting member 260 may include, e.g., an upper supporting member 260a and a lower supporting member 260b. In an embodiment, the upper supporting member 260a, together with a portion of the first supporting member 211, may be disposed to surround the printed circuit board 240. A circuit device (e.g., a processor, a communication module, or memory) implemented in the form of an integrated circuit chip or various electrical/electronic components may be disposed on the printed circuit board 240. According to an embodiment, the printed circuit board 240 may receive an electromagnetic shielding environment from the upper supporting member 260a. In an embodiment, the lower supporting member 260b may be utilized as a structure in which electrical/electronic components, such as a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional printed circuit board (not shown). In this case, the lower supporting member 260b, together with the other part of the first supporting member 211, may be disposed to surround the additional printed circuit board. A speaker module or interface disposed on an additional printed circuit board (not shown) or lower supporting member 260b may be disposed corresponding to the connector hole (e.g., the first connector hole 128 or the second connector hole 109) or the audio module (e.g., the microphone hole 103 or the speaker hole (e.g., the external speaker hole 107 or the phone receiver hole 114)) of FIG. 2.

According to an embodiment, the battery 250 may be a device for supplying power to at least one component of the electronic device 101. The battery 189 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally or detachably disposed inside the electronic device 101.

Although not shown, the antenna may include a conductor pattern implemented on the surface of the second supporting member 260 through, e.g., laser direct structuring. **In an** embodiment, the antenna may include a printed circuit pattern formed on the surface of the thin film. The thin film-type antenna may be disposed between the rear plate 280 and the battery 250. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. **In** an embodiment of the present invention, another antenna structure may be formed by a portion or combination of the side structure 210 and/or the first supporting member 211.

According to an embodiment, the camera assembly 207 may include at least one camera module. Inside the electronic device 101, the camera assembly 207 may receive at least a portion of the light incident through the optical hole or the camera windows 212, 213, and 219. In an embodiment, the camera assembly 207 may be disposed on the first supporting member 211 in a position adjacent to the printed circuit board 240. In an embodiment, the camera module(s) of the camera assembly 207 may be generally aligned with either one of the camera windows 212, 213, and 219 and be a least partially surrounded by the second supporting member 260 (e.g., the upper supporting member 260a).

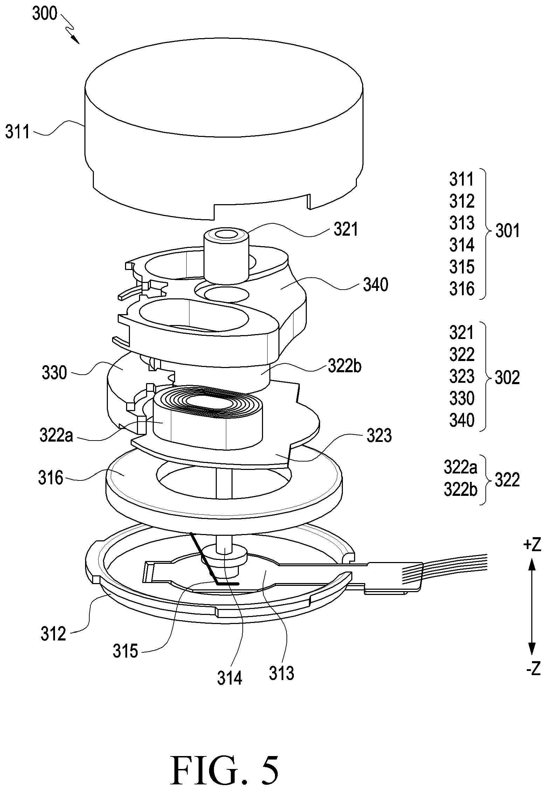

FIG. 5 is an exploded perspective view illustrating a motor structure 300 according to an embodiment of the disclosure.

Referring to FIG. 5, an electronic device 101 may include a housing (e.g., the housing 201 of FIG. 4) and a motor structure 300. The structure of FIG. 5 may be selectively combinable with the structures of FIGS. 2 to 4.

According to an embodiment, in order to improve the aesthetic properties of the electronic device 101 and/or to reduce the thickness of the electronic device 101 in the folded state, at least a portion of the housing (e.g., the housing 201 of FIG. 4) may be formed of a metal material. According to an embodiment, the housing (e.g., the housing 201 of FIG. 4) may include at least one conductive portion (not shown) segmented along at least a portion of the side surface. For example, the conductive portion (not shown) may be a frame formed of the metal material of the housing (e.g., the housing 201 of FIG. 4) and may be utilized as the radiator of an antenna. **In** an embodiment, one end of the conductive portion (not shown) may be segmented so that the conductive portion (not shown) is utilized as a radiator of the antenna. However, the segmented portion may be variously designed and changed according to the frequency utilization range of the antenna. According to an embodiment, the rear surface (e.g., the rear plate 280 of FIG. 4) of the housing (e.g., the housing 201 of FIG. 4) may include a material that does not interfere with antenna radiation. For example, the rear surface of the housing (e.g., the housing 201 of FIG. 4) may include glass or an injection-molded material.

According to an embodiment, the electronic device 101 may further include an antenna structure, and the antenna structure may include multiple antennas. For example, the antenna may include a conductive portion (not shown), a feeding portion (not shown), or a ground portion (not shown). According to an embodiment, at least one component (e.g., a conductive portion (not shown)) of the antenna structure may be positioned in one area of the housing (e.g., the housing 201 of FIG. 4).

According to an embodiment, the electronic device 101 may include an (electric) motor structure 300 that generates vibration. For example, the (electric) vibration motor applied to the electronic device 101 may be divided into a coin-type having a thin thickness and a bar type having a long shape according to the shape of the motor. According to an embodiment, the motor structure 300 according to the disclosure may be a coin-type vibration motor. However, the type and shape of the motor structure 300 are not limited by the above embodiment.

According to an embodiment, the motor structure 300 may be disposed in the housing (e.g., the housing 201 of FIG. 4). According to an embodiment, the motor structure 300 may at least partially overlap and/or be stacked with the conductive portion (not shown) operating as the radiator of an antenna. For example, the conductive portion (not shown) and the motor structure 300 may at least partially overlap each other with respect to the Z-axis of FIG. 4B. When the motor structure 300 is operated, the counter weight 330 including metal rotates, and thus the distance between the counter weight 330 and the conductive portion (not shown) may not be constant.

According to an embodiment, the motor structure 300 may largely include a fixed part 301 (stator assembly) and a rotatable part 302 (rotor assembly).

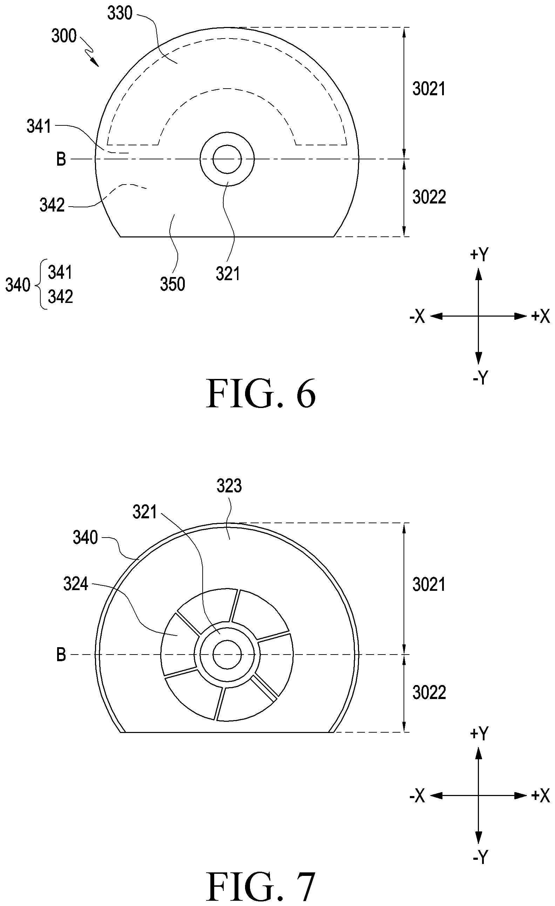

According to an embodiment, the fixed part 301 of the motor structure 300 may include an upper case 311 and a lower case 312 coupled to each other. According to an embodiment, the lower substrate 313 may be attached to the lower case 312, and the shaft 314 may be formed in the center of the lower case 312 to penetrate the lower substrate 313. According to an embodiment, a lower end portion of the brush 315 may be connected to the lower substrate 313. The lower end of the brush 315 may contact the lower substrate 313 and the upper end thereof may contact a commutator (e.g., 324 of FIG. 7) formed on the lower surface of the rotation part 302 to supply power applied from an external power source.

According to an embodiment, the fixed part 301 may include a ring-shaped magnet 316 fixed to an edge portion of the lower substrate 313. The magnet 316 may include an opening through which the shaft 314 passes. The magnet 316 may be magnetized by alternating N poles and S poles. For example, the magnet 316 may be disposed so that eight N poles and S poles are alternately arranged.

According to an embodiment, the rotatable part 302 may be rotatably coupled to the shaft 314. According to an embodiment, the rotatable part 302 may include a bearing 321 supporting the shaft 314, a coil assembly 322, an upper substrate 323, a commutator (e.g., the commutator 324 of FIG. 7), a counter weight 330, and an injection-molded member 340.

According to an embodiment, the bearing 321 may be disposed on the rotation shaft of the rotatable part 302 and may be coupled to the shaft 314 to perform smooth rotation.

According to an embodiment, the coil assembly 322 may be configured to generate an electromagnetic force through interaction with the magnet 316. The coil assembly 322 may include a first coil 322a and a second coil 322b spaced from each other by a predetermined distance and having a predetermined winding. The angle between the center of each coil and the axis of the rotatable part may be about 120 degrees or more and 170 degrees or less.

According to an embodiment, the upper substrate 323 may be electrically connected to the coil assembly 322. According to an embodiment, a counter weight 330 may be disposed between the first coil 322a and the second coil 322b. According to an embodiment, the injection-molded member 340 may at least partially contact the counter weight 330. For example, at least a portion of the injection-molded member 340 and the counter weight 330 may be coupled to each other. For example, the injection-molded member 340 may be formed of an insulating resin as an insulator.

According to an embodiment, the motor structure 300 may obtain mechanical vibration by rotating the rotatable part 302 having an unbalanced mass. The rotational force may be generated in a structure in which a current is supplied to the coil assembly 322 of the rotatable part 302 through a contact point between the brush 315 and a commutator (e.g., the commutator 324 of FIG. 7). For example, when external power is applied, a current flows through the brush 315 and the upper substrate 323 to the coil assembly 322 disposed in the rotatable part 302, and the rotatable part 302, of which the center-of-mass is eccentric due to the counter weight 330, may rotate around the shaft 314 with the bearing 321 interposed therebetween due to the interaction between the magnet 316 and a field magnet formed as a case, thereby causing vibration. According to an embodiment, the rotary vibration motor structure 300, which generates vibration by rotating the eccentric rotatable part 302, may determine the vibration amount (vibration force) according to the amount of eccentricity, eccentric mass, and driving RPM (revolutions per minute), which are design parameters for the motor. For example, the vibration amount F may be proportional to the mass of the vibrating body m, the eccentricity amount e, and the square ω2 of the driving RPM (revolutions per minute) (*F*∝*m* × *e* × ω2). For example, as the weight of the counter weight 330 increases, the amount of vibration generated may increase. In this case, the vibration direction of the rotatable part 302 may be a plane where the rotatable part 302 rotates, i.e., a plane (e.g., an XY plane) perpendicular to the shaft 314. For example, the rotatable part 302 may rotate about the shaft 314 in a first rotation direction (e.g., a clockwise direction) and/or a second rotation direction (e.g., a counterclockwise direction) opposite to the first rotation direction.

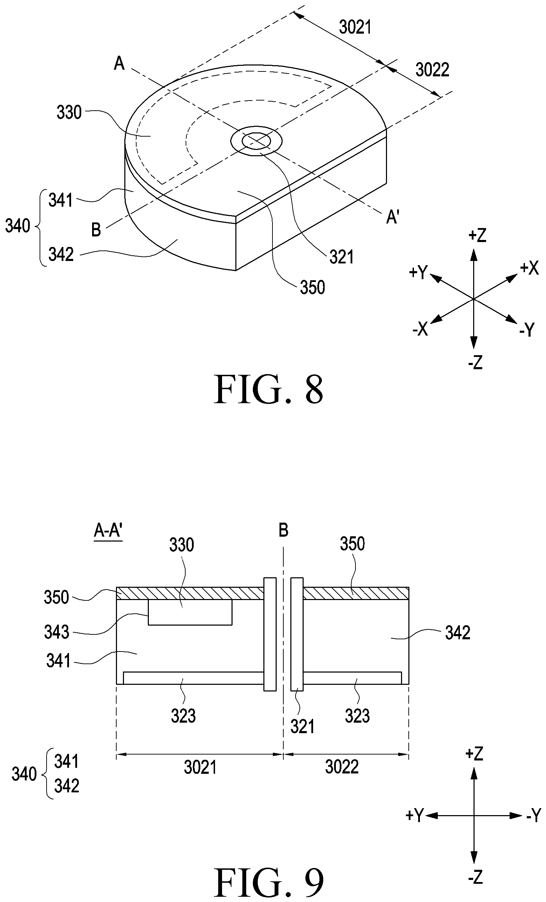

FIG. 6 is a view illustrating a rotatable part 302 of a motor structure 300 according to an embodiment of the disclosure, as viewed upward (+Z direction). FIG. 7 is a view illustrating a rotatable part 302 of a motor structure 300 according to an embodiment of the disclosure, as viewed downward (-Z direction). FIG. 8 is a perspective view illustrating the rotatable part 302 of the motor structure 300 according to an embodiment of the disclosure, as viewed from a side. FIG. 9 is a cross-sectional view illustrating the rotatable part 302 of the motor structure 300 of FIG. 8, taken along line A-A', according to an embodiment of the disclosure.

Referring to FIGS. 6 to 9, the rotatable part 302 of the motor structure 300 may include a bearing 321, a coil assembly 322, a counter weight 330, a commutator 324, an upper substrate 323, an injection-molded member 340, and/or a metal member 350. The configuration of the rotatable part 302 of FIGS. 6 to 9 may be identical in whole or part to the configuration of the rotatable part 302 of FIG. 5. The structure of FIGS. 6 to 9 may be selectively coupled to the structure of FIG. 5.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the height of the second injection-molded portion 342 may be smaller than the height of the first injection-molded portion 341. For example, the first injection-molded portion 341 may have a semicircular shape, and the second injection-molded portion 342 may have a shape at least partially etched from a semicircular shape.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. For example, the recess 343 of the injection-molded member 340 may be formed to correspond to the shape and size of the counter weight 330. For example, the upper surface (e.g., one surface facing the +Z-side direction) of the injection-molded member 340 and the upper surface (e.g., one surface facing the +Z-side direction) of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 350 that is a conductive member to resolve an imbalance in radiation due to rotation from the perspective of an antenna. For example, the metal member 350 may be disposed on the injection-molded member 340. At least a portion of the metal member 350 may be disposed on the counter weight 330.

According to an embodiment, the metal member 350 may be disposed in an area where the counter weight 330 is not disposed. According to an embodiment, at least a portion of the metal member 350 may be positioned in the second area 3022. For example, the metal member 350 may be positioned in the first area 3021 and the second area 3022, or may be positioned only in the second area 3022. Accordingly, the conductive member of the rotatable part 302, e.g., the metal material, may be disposed substantially symmetrically. Because the metal material of the rotatable part 302 is disposed substantially symmetrically and stacked with the antenna, there may be no radiation deviation according to the position of the rotatable part 302.

For example, if the counter weight 330 is conductive, the combination of the counter weight 330 and the metal member 350 may enable a substantially balanced distribution of conductivity of the first area 3021 and the second area 3021.

According to an embodiment, the weight of the metal member 350 may be smaller than the weight of the counter weight 330. The weight of the metal member 350 may be a second weight that is smaller than the first weight. The weight of the metal member 350 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

According to an embodiment, the metal member 350 may cover the whole or part of one surface of the injection-molded member 340 facing upward (+Z direction). For example, the metal member 350 may cover the entire upper surface (e.g., one surface facing the +Z side) of the injection-molded member 340 and the counter weight 330. According to an embodiment, the metal member 350 may include a conductive paint having a high conductivity and having a light weight. For example, the surface resistance value of the conductive paint may be about 0.02 (ohm/sq) or more and 0.04 (ohm/sq) or less. For example, the conductive paint is a paint obtained by mixing a conductive powder (e.g., a powder such as carbon black, graphite, silver, copper, or nickel) or an organic salt with a colorant, and its composition and use may vary depending on the electrical resistance value.

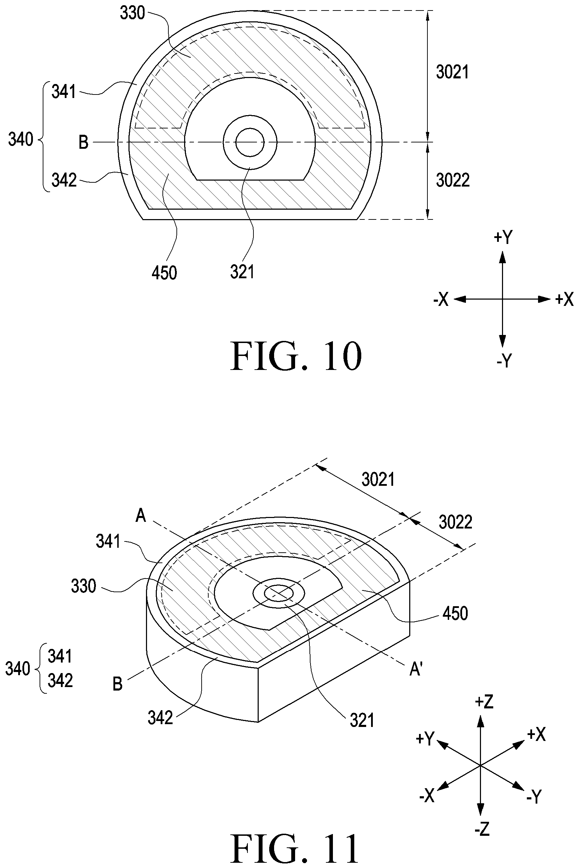

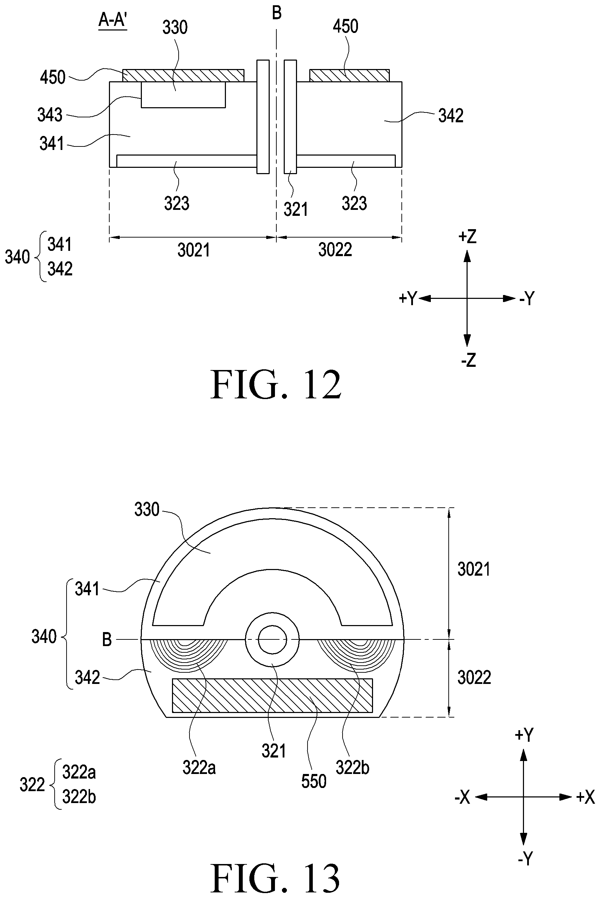

According to an embodiment, the mass of the rotatable part 302 may be distributed asymmetrically, while the conductivity of the rotatable part 302 may be distributed symmetrically. Because the mass may be unbalanced, the motor structure may cause vibrations. Because the conductivity is balanced, the motor structure may not disturb the operation of the antenna. FIG. 10 is a view illustrating a rotatable part 302 of a motor structure 300 according to an embodiment of the disclosure, as viewed upward. FIG. 11 is a perspective view illustrating the rotatable part 302 of the motor structure 300 according to an embodiment of the disclosure, as viewed from a side. FIG. 12 is a cross-sectional view illustrating the rotatable part 302 of the motor structure 300 of FIG. 11, taken along line A-A', according to an embodiment of the disclosure.

Referring to FIGS. 10 to 12, the rotatable part 302 of the motor structure 300 may include a bearing 321, a coil assembly 322, a counter weight 330, a commutator 324, an upper substrate 323, an injection-molded member 340, and a metal member 450. The configuration of the rotatable part 302 of FIGS. 10 to 12 may be identical in whole or part to the configuration of the rotatable part 302 of FIGS. 6 to 9. The structure of FIGS. 10 to 12 may be selectively combinable with the structures of FIGS. 6 to 9.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other. However, because the conductivity of the rotatable part 302 may be substantially balanced, rotating may not disturb the operation of the antenna.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the first injection-molded portion 341 may have a semicircular shape, and the second injection-molded portion 342 may have a shape at least partially etched from a semicircular shape.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. The recess 343 of the injection-molded member 340 may be formed to correspond to the shape and size of the counter weight 330. For example, the upper surface of the injection-molded member 340 and the upper surface of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 450 that is a conductive member to resolve an imbalance caused by rotation in terms of an antenna. The metal member 450 may be disposed on the injection-molded member 340. At least a portion of the metal member 450 may be disposed on the counter weight 330.

According to an embodiment, the metal member 450 may be disposed in an area where the counter weight 330 is not disposed. According to an embodiment, at least a portion of the metal member 450 may be positioned in the second area 3022. For example, the metal member 450 may be positioned in the first area 3021 and the second area 3022, or may be positioned only in the second area 3022. Accordingly, the conductive member of the rotatable part 302, i.e., the metal material, may be disposed substantially symmetrically. Because the metal material of the rotatable part 302 is disposed substantially symmetrically and stacked with the antenna, there may be no radiation deviation according to the position of the rotatable part 302.

According to an embodiment, the weight of the metal member 450 may be smaller than the weight of the counter weight 330. The weight of the metal member 450 may be a second weight that is smaller than the first weight. The weight of the metal member 450 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

According to an embodiment, the metal member 450 may cover the whole or part of one surface of the injection-molded member 340 facing upward (+Z direction). For example, the metal member 450 may cover a portion of the upper surfaces of the injection-molded member 340 and the counter weight 330. For example, the metal member 450 may be applied and/or disposed in a ring shape except for a central portion and/or an edge portion of the injection-molded member 340.

According to an embodiment, the metal member 450 may include a conductive paint having conductivity and having a light weight. For example, the surface resistance value of the conductive paint may be about 0.02 (ohm/sq) or more and 0.04 (ohm/sq) or less. For example, the conductive paint is a paint obtained by mixing a conductive powder (e.g., a powder such as carbon black, graphite, silver, copper, or nickel) or an organic salt with a colorant, and its composition and use may vary depending on the electrical resistance value.

According to an embodiment, the mass of the rotatable part 302 may be distributed asymmetrically, while the conductivity of the rotatable part 302 may be distributed symmetrically. Because the mass may be unbalanced, the motor structure may cause vibrations. Because the conductivity is balanced, the motor structure may not disturb the operation of the antenna.

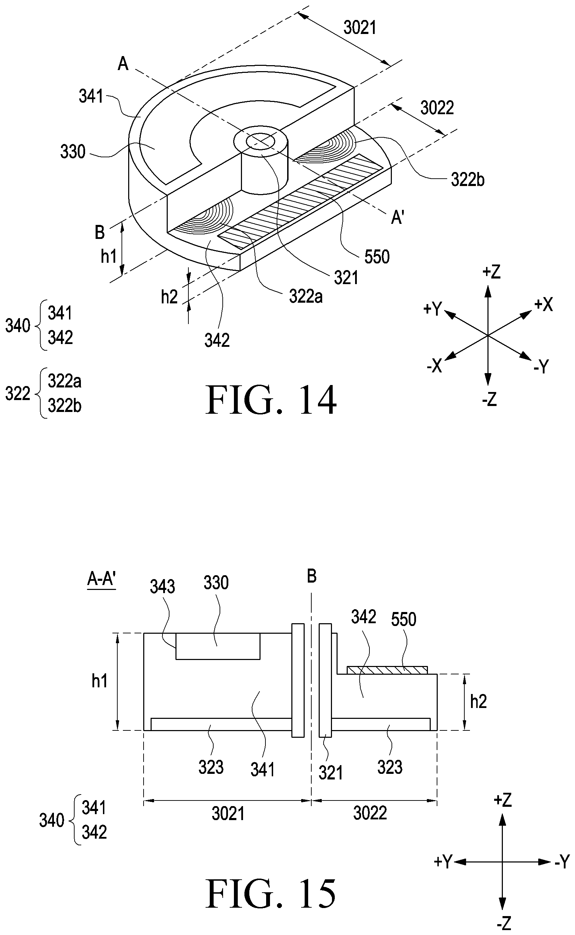

FIG. 13 is a view illustrating a rotatable part 302 of a motor structure 300 according to an embodiment of the disclosure, as viewed upward. FIG. 14 is a perspective view illustrating the rotatable part 302 of the motor structure 300 of FIG. 13 according to an embodiment of the disclosure, as viewed from a side. FIG. 15 is a cross-sectional view illustrating the rotatable part 302 of the motor structure 300 of FIG. 14, taken along line A-A', according to an embodiment of the disclosure.

Referring to FIGS. 13 to 15, the rotatable part 302 of the motor structure 300 may include a bearing 321, a coil assembly 322, a counter weight 330, a commutator 324, an upper substrate 323, an injection-molded member 340, and a metal member 550. The configuration of the rotatable part 302 of FIGS. 13 to 15 may be identical in whole or part to the configuration of the rotatable part 302 of FIGS. 10 to 12. The structure of FIGS. 13 to 15 may be selectively coupled to the structure of FIGS. 10 to 12.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the first injection-molded portion 341 may have a semicircular shape, and the second injection-molded portion 342 may have a shape at least partially etched from a semicircular shape. According to an embodiment, the height of the second injection-molded portion 342 may be lower than the height of the first injection-molded portion 341. For example, the height of the first injection-molded portion 341 may be a first height h1, and the height of the second injection-molded portion 342 may be a second height h2 lower than the first height h1.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. The recess 343 of the injection-molded member 340 may be formed to correspond to the shape and size of the counter weight 330. For example, the upper surface of the injection-molded member 340 and the upper surface of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 550 that is a conductive member to resolve an imbalance caused by rotation in terms of an antenna. The metal member 550 may be disposed on the injection-molded member 340.

According to an embodiment, the metal member 550 may be disposed in an area where the counter weight 330 is not disposed. According to an embodiment, at least a portion of the metal member 550 may be positioned in the second area 3022. For example, the metal member 550 may be positioned only in the second area 3022. For example, the metal member 550 may be linearly disposed in the second area 3022. Accordingly, the conductive member of the rotatable part 302, such as a metal material, may be disposed substantially symmetrically. Because the metal material of the rotatable part 302 is disposed substantially symmetrically and stacked with the antenna, there may be no or reduced radiation deviation depending on the position of the rotatable part 302.

According to an embodiment, the weight of the metal member 550 may be smaller than the weight of the counter weight 330. For example, the weight of the metal member 550 may be a second weight that is smaller than the first weight. The weight of the metal member 550 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

According to an embodiment, the metal member 550 may cover the whole or part of one surface of the injection-molded member 340 facing upward (+Z direction). For example, the metal member 550 may cover a portion of the upper surface of the injection-molded member 340. For example, the metal member 550 may linearly apply and/or dispose a portion of the second injection-molded portion 342.

According to an embodiment, the metal member 550 may include a conductive paint having high conductivity and having a light weight. For example, the surface resistance value of the conductive paint may be about 0.02 (ohm/sq) or more and 0.04 (ohm/sq) or less. The conductive paint is a paint obtained by mixing a conductive powder (e.g., a powder such as carbon black, graphite, silver, copper, or nickel) or an organic salt with a colorant, and its composition and use may vary depending on the electrical resistance value.

According to an embodiment, the mass of the rotatable part 302 may be distributed asymmetrically, while the conductivity of the rotatable part 302 may be distributed symmetrically. Because the mass may be unbalanced, the motor structure may cause vibrations. Because the conductivity is balanced, the motor structure may not disturb the operation of the antenna.

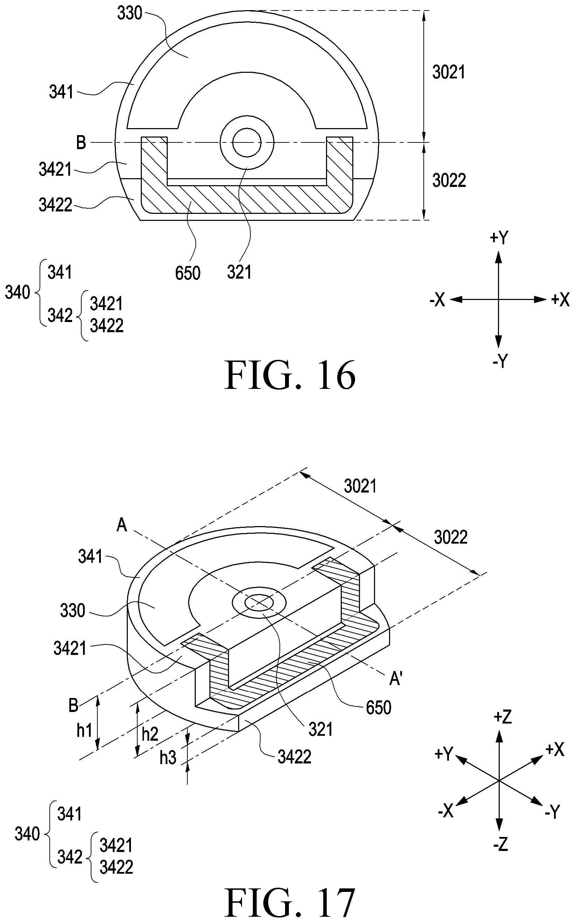

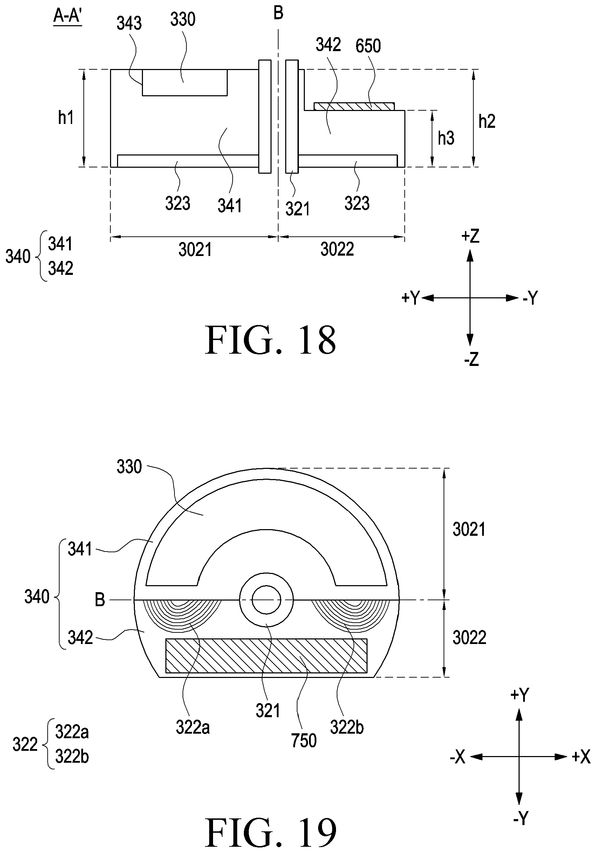

FIG. 16 is a view illustrating a rotatable part 302 of a motor structure 300 according to an embodiment of the disclosure, as viewed upward. FIG. 17 is a perspective view illustrating the rotatable part 302 of the motor structure 300 of FIG. 16 according to an embodiment of the disclosure, as viewed from a side. FIG. 18 is a cross-sectional view illustrating the rotatable part 302 of the motor structure 300 of FIG. 17, taken along line A-A', according to an embodiment of the disclosure.

Referring to FIGS. 16 to 18, the rotatable part 302 of the motor structure 300 may include a bearing 321, a coil assembly 322, a counter weight 330, a commutator 324, an upper substrate 323, an injection-molded member 340, and/or a metal member 650. The configuration of the rotatable part 302 of FIGS. 16 to 18 may be identical in whole or part to the configuration of the rotatable part 302 of FIGS. 13 to 15. The structure of FIGS. 16 to 18 may be selectively combinable with the structures of FIGS. 13 to 15.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the first injection-molded portion 341 may have a semicircular shape, and the second injection-molded portion 342 may have a shape at least partially etched from a semicircular shape. According to an embodiment, the height of at least a portion of the second injection-molded portion 342 may be lower than the height of the first injection-molded portion 341. For example, the height of the first injection-molded portion 341 may be a first height h1, and the second injection-molded portion 342 may be divided into a 2-1st injection-molded portion 3421 extending from the first injection-molded portion 341 and having a second height h2, and a 2-2nd injection-molded portion 3422 extending from the 2-1st injection-molded portion 3421 and having a third height h3 smaller than the second height h2. For example, referring to FIG. 17, the second height h2 may be the same as the first height h1. For example, the second height h2 may be smaller than the first height h1.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. The recess 343 of the injection-molded member 340 may be formed to correspond to the shape and size of the counter weight 330. For example, the upper surface of the injection-molded member 340 and the upper surface of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 650 that is a conductive member to resolve an imbalance caused by rotation in terms of an antenna. The metal member 650 may be disposed on the injection-molded member 340.

According to an embodiment, the metal member 650 may be disposed in an area where the counter weight 330 is not disposed. According to an embodiment, at least a portion of the metal member 650 may be positioned in the second area 3022. For example, the metal member 650 may be positioned only in the second area 3022. For example, the metal member 650 may be disposed in a "⊏" shape or in a "U"-shape in the second area 3022. For example, the metal member 650 may include a first portion extending in the X-axis direction, a second portion extending from one end of the first portion in a direction perpendicular to the first portion, and a third portion extending from the other end of the first portion in a direction perpendicular to the first portion. According to an embodiment, the metal member 650 may be disposed on the second injection-molded portion 342. For example, the first portion may be disposed on the 2-2nd injection-molded portion 3422. For example, at least a portion of the second portion and/or the third portion may be disposed on the 2-2nd injection-molded portion 3422, and may be disposed on the 2-1st injection-molded portion 3421 along the sidewall of the 2-1st injection-molded portion 3421. Accordingly, the conductive member of the rotatable part 302, e.g., the metal material, may be disposed substantially symmetrically. Because the metal material of the rotatable part 302 is disposed substantially symmetrically and stacked with the antenna, there may be no or reduced radiation deviation depending on the position of the rotatable part 302.

According to an embodiment, the weight of the metal member 650 may be smaller than the weight of the counter weight 330. The weight of the metal member 650 may be a second weight that is smaller than the first weight. The weight of the metal member 650 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

According to an embodiment, the metal member 650 may cover the whole or part of one surface of the injection-molded member 340 facing upward (+Z direction). For example, the metal member 650 may cover a portion of the upper surface of the injection-molded member 340. For example, the metal member 650 may linearly apply and/or dispose a portion of the second injection-molded portion 342.

According to an embodiment, the metal member 650 may include a laser direct structuring (LDS) resin. The laser direct structuring (LDS) resin may be a method of forming a circuit pattern on a component using a laser. Compared to metal paint using physical vapor deposition (PVD), it may be implemented in various shapes such as curved portions, and may be implemented in various patterns. For example, the metal member 650 may be applied to and/or disposed on the injection-molded member 340 having a different height. For example, the metal member 650 may be applied and/or disposed on the 2-1st injection-molded portion 3421, a side portion connecting the 2-1st injection-molded portion 3421 and the 2-2nd injection-molded portion 3422 and perpendicular to the upper surface of the injection-molded member 340, and the 2-2nd injection-molded portion 3422.

According to an embodiment, the mass of the rotatable part 302 may be distributed asymmetrically, while the conductivity of the rotatable part 302 may be distributed symmetrically. Because the mass may be unbalanced, the motor structure may cause vibrations. Because the conductivity is balanced, the motor structure may not disturb the operation of the antenna.

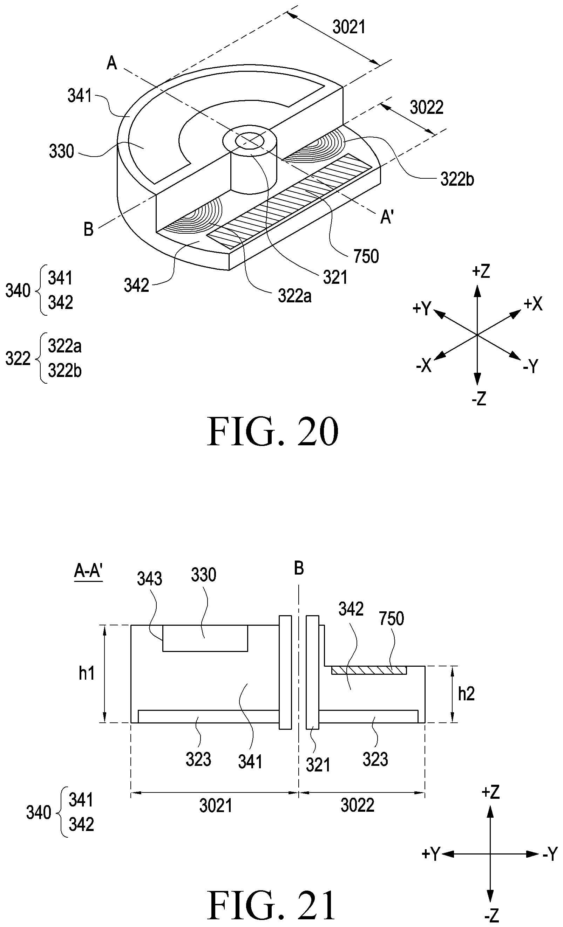

FIG. 19 is a view illustrating a rotatable part 302 of a motor structure 300 according to an embodiment of the disclosure, as viewed upward. FIG. 20 is a perspective view illustrating the rotatable part 302 of the motor structure 300 of FIG. 19 according to an embodiment of the disclosure, as viewed from a side. FIG. 21 is a cross-sectional view illustrating the rotatable part 302 of the motor structure 300 of FIG. 20, taken along line A-A', according to an embodiment of the disclosure.

Referring to FIGS. 19 to 21, the rotatable part 302 of the motor structure 300 may include a bearing 321, a coil assembly 322, a counter weight 330, a commutator 324, an upper substrate 323, an injection-molded member 340, and/or a metal member 750. The configuration of the rotatable part 302 of FIGS. 19 to 21 may be identical in whole or part to the configuration of the rotatable part 302 of FIGS. 16 to 18. The structure of FIGS. 19 to 21 may be selectively combinable with the structures of FIGS. 16 to 18.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the first injection-molded portion 341 may have a semicircular shape, and the second injection-molded portion 342 may have a shape at least partially etched from a semicircular shape. According to an embodiment, the height of at least a portion of the second injection-molded portion 342 may be lower than the height of the first injection-molded portion 341. For example, the height of the first injection-molded portion 341 may be a first height h1, and the height of the second injection-molded portion 342 may be a second height h2 smaller than the first height h1.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. The recess 343 of the injection-molded member 340 may be formed to correspond to the shape and size of the counter weight 330. For example, the upper surface of the injection-molded member 340 and the upper surface of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 750 that is a conductive member to resolve an imbalance caused by rotation in terms of an antenna. The metal member 750 may be disposed on the injection-molded member 340.

According to an embodiment, the metal member 750 may be disposed in an area where the counter weight 330 is not disposed. According to an embodiment, at least a portion of the metal member 750 may be positioned in the second area 3022. For example, the metal member 750 may be positioned only in the second area 3022. For example, the metal member 750 may be linearly disposed in the second area 3022. Accordingly, the conductive member of the rotatable part 302, such as a metal material, may be disposed substantially symmetrically. Because the metal material of the rotatable part 302 is disposed substantially symmetrically and stacked with the antenna, there may be no or reduced radiation deviation depending on the position of the rotatable part 302.

According to an embodiment, the weight of the metal member 750 may be smaller than the weight of the counter weight 330. The weight of the metal member 750 may be a second weight that is smaller than the first weight. The weight of the metal member 750 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

According to an embodiment, the metal member 750 may include a copper sheet, and may have a double injection-molded structure integrally formed with the second injection-molded portion 342. The metal member 750 is bonded to the second injection-molded portion 342 in a double injection-molded structure, providing advantages in terms of being separated or vibration connecting when the rotatable part 302 rotates.

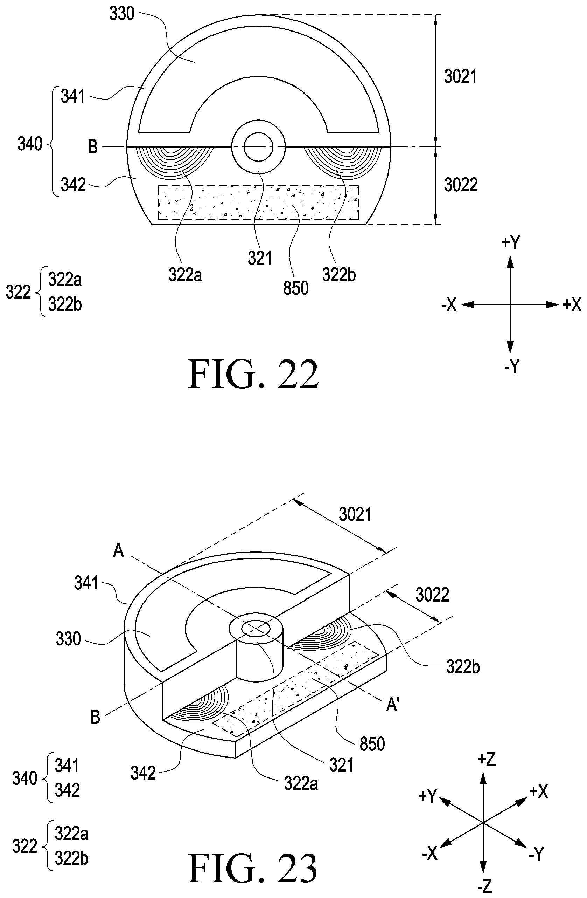

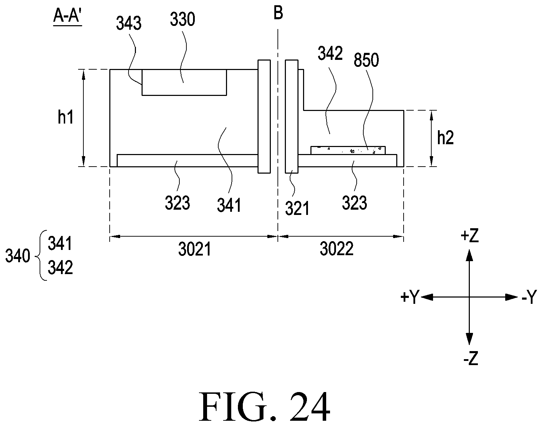

FIG. 22 is a view illustrating a rotatable part 302 of a motor structure 300 according to an embodiment of the disclosure, as viewed upward. FIG. 23 is a perspective view illustrating the rotatable part 302 of the motor structure 300 of FIG. 22 according to an embodiment of the disclosure, as viewed from a side. FIG. 24 is a cross-sectional view illustrating the rotatable part 302 of the motor structure 300 of FIG. 23, taken along line A-A', according to an embodiment of the disclosure.

Referring to FIGS. 22 to 24, the rotatable part 302 of the motor structure 300 may include a bearing 321, a coil assembly 322, a counter weight 330, a commutator 324, an upper substrate 323, an injection-molded member 340, and/or a metal member 850. The configuration of the rotatable part 302 of FIGS. 22 to 24 may be identical in whole or part to the configuration of the rotatable part 302 of FIGS. 19 to 21. The structure of FIGS. 22 to 24 may be selectively combinable with the structures of FIGS. 19 to 21.

According to an embodiment, the rotatable part 302 may have an asymmetric structure. According to an embodiment, the rotatable part 302 may be eccentrically disposed. According to an embodiment, the rotatable part 302 may have an unbalanced mass. For example, the rotatable part 302 may be unbalanced in weight. According to an embodiment, the rotatable part 302 may be divided into a first area 3021 and a second area 3022 having different weights and/or structures. The first area 3021 and the second area 3022 may be divided based on a reference line B (perpendicularly) intersecting the rotation axis. The rotatable part 302 may be configured to generate vibration when rotating because the weights of the first area 3021 and the weight of the second area 3022 are different from each other.

According to an embodiment, the injection-molding member 340 may include a first injection-molded portion 341 disposed in the first area 3021, and a second injection-molded portion 342 extending from the first injection-molded portion 341 and disposed in the second area 3022. According to an embodiment, the weight of the second injection-molded portion 342 may be smaller than the weight of the first injection-molded portion 341. For example, the volume and/or size of the second injection-molded portion 342 may be smaller than the volume and/or size of the first injection-molded portion 341. For example, the first injection-molded portion 341 may have a semicircular shape, and the second injection-molded portion 342 may have a shape at least partially etched from a semicircular shape. According to an embodiment, the height of at least a portion of the second injection-molded portion 342 may be lower than the height of the first injection-molded portion 341. For example, the height of the first injection-molded portion 341 may be a first height h1, and the height of the second injection-molded portion 342 may be a second height h2 smaller than the first height h1.

According to an embodiment, the counter weight 330 may at least partially contact the injection-molded member 340. For example, the counter weight 330 may be coupled to the injection-molded member 340. According to an embodiment, the injection-molded member 340 may include a recess 343 recessed downward (-Z direction) from the upper surface of the injection-molded member 340. According to an embodiment, the recess 343 of the injection-molded member 340 may be formed in the first area 3021. According to an embodiment, the counter weight 330 may be disposed in the recess 343 of the injection-molded member 340. The recess 343 of the injection-molded member 340 may be formed to correspond to the shape and size of the counter weight 330. For example, the upper surface of the injection-molded member 340 and the upper surface of the counter weight 330 may be substantially the same plane.

According to an embodiment, the motor structure 300 may asymmetrically dispose the counter weight 330 having the first weight only at a portion thereof to increase the amount of vibration when the rotatable part 302 rotates. According to an embodiment, the counter weight 330 may be unbalancedly disposed in the first area 3021 and the second area 3022. According to an embodiment, the counter weight 330 may be positioned only in the first area 3021.

According to an embodiment, since the vibration amount is proportional to the weight of the counter weight 330, a metal material having a high density may be used. For example, the counter weight 330 may include tungsten (w). For example, the first weight may be about 0.2, about 0.22, and/or about 0.215 g.

According to an embodiment, the rotatable part 302 of the motor structure 300 may include a metal member 850 that is a conductive member to resolve an imbalance caused by rotation in terms of an antenna. The metal member 850 may be disposed on the upper substrate 323. For example, it may be disposed on one surface of the upper substrate 323 facing upward. For example, the metal member 850 may be a pattern included in the upper substrate 323.

According to an embodiment, the metal member 850 may be disposed in an area where the counter weight 330 is not disposed. According to an embodiment, at least a portion of the metal member 850 may be positioned in the second area 3022. For example, the metal member 850 may be positioned only in the second area 3022. According to an embodiment, the metal member 850 may be disposed on the upper substrate 323 positioned in the second area 3022. For example, the metal member 850 may be linearly disposed in the second area 3022. Accordingly, the conductive member of the rotatable part 302, such as a metal material, may be disposed substantially symmetrically. Because the metal material of the rotatable part 302 is disposed substantially symmetrically and stacked with the antenna, there may be no radiation deviation according to the position of the rotatable part 302.

According to an embodiment, the weight of the metal member 850 may be smaller than the weight of the counter weight 330. The weight of the metal member 850 may be a second weight that is smaller than the first weight. The weight of the metal member 850 may be smaller than the weight of the counter weight 330 in order to minimize the reduction of the vibration force due to the substantially symmetrical placement of the metal material of the rotatable part 302. The weight imbalance between the first area 3021 and the second area 3022 of the rotatable part 302 may be maintained.

A motor structure 300 according to an embodiment of the disclosure may comprise a shaft, a ring-shaped magnet 316 including an opening through which the shaft passes, and a rotatable part 302 configured to rotate about the shaft, and including a first area 3021 and a second area 3022 divided with respect to a reference line B intersecting a rotation axis. The rotatable part 302 may include a coil assembly configured to generate an electromagnetic force through interaction with the magnet 316, a counter weight 330 positioned in the first area 3021 and having a first weight, and a metal member 350 at least partially positioned in the second area 3022 and having a second weight smaller than the first weight.

According to an embodiment, the rotatable part may be configured to generate a vibration when rotating as the first area and the second area differ in weight.

According to an embodiment, the rotatable part may further include an upper substrate electrically connected to the coil assembly, a bearing supporting the shaft, and an injection-molded member contacting the counter weight.

According to an embodiment, the injection-molded member may include a first injection-molded portion disposed in the first area, and a second injection-molded portion extending from the first injection-molded portion and disposed in the second area. A weight of the second injection-molded portion may be smaller than a weight of the first injection-molded portion.

According to an embodiment, a height of the second injection-molded portion may be smaller than a height of the first injection-molded portion.

According to an embodiment, the metal member may be disposed on the injection-molded member.

According to an embodiment, the metal member may cover an entire surface facing an upper direction of the injection-molded member.

According to an embodiment, the metal member may cover a portion of a surface facing an upper direction of the injection-molded member.

According to an embodiment, the metal member may include a conductive paint.

According to an embodiment, the metal member may be an LDS resin.

According to an embodiment, the metal member may be integrally formed with the injection-molded member and be a copper sheet.

According to an embodiment, the metal member may be disposed between the upper substrate and the injection-molded member and be attached onto the upper substrate.

An electronic device according to an embodiment of the disclosure may comprise a housing including a conductive portion, and a motor structure disposed in the housing and disposed to at least partially overlap the conductive portion. The motor structure may include a shaft, a ring-shaped magnet including an opening through which the shaft passes, and a rotating partrotatable part configured to rotate about the shaft, and divided into a first area and a second area with respect to a reference line intersecting a rotation axis, and the rotatable part may include a coil assembly configured to generate an electromagnetic force through interaction with the magnet, a counter weight positioned in the first area and having a first weight, and a metal member at least partially positioned in the second area and having a second weight smaller than the first weight.

According to an embodiment, the rotatable part may be configured to generate a vibration when rotating as the first area and the second area differ in weight.

According to an embodiment, the rotatable part may further include an upper substrate electrically connected to the coil, a bearing supporting the shaft, and an injection-molded member contacting the counter weight.

According to an embodiment, the injection-molded member may include a first injection-molded portion disposed in the first area, and a second injection-molded portion disposed in the second area. A weight of the second injection-molded portion may be smaller than a weight of the first injection-molded portion.

According to an embodiment, a height of the second injection-molded portion may be smaller than a height of the first injection-molded portion.

According to an embodiment, the metal member may be disposed on the injection-molded member.

According to an embodiment, the metal member may cover an entire surface facing a first direction of the injection-molded member.

According to an embodiment, the metal member may cover a portion of a surface facing a first direction of the injection-molded member.

Technical objects to be achieved herein are not limited to the foregoing technical objects, and other technical objects not mentioned may be clearly understood by those skilled in the art from the following description.

**In** general, at least a portion of a housing (e.g., the housing 201 of FIG. 4) may be a conductive portion that is a portion of an antenna. When designing the electronic device 101, the motor structure 300 and at least a portion of the conductive portion may be stacked due to lack of mounting space. Since the position of the counter weight after vibration of the motor structure 300 is not specified, the performance of adjacent antennas may vary depending on the distance from the conductive portion.

In the motor structure 300 according to the disclosure, the metal member 350 may be disposed in an area where no counter weight is placed. It may be possible to eliminate the radiation deviation according to the position of the rotatable part 302 by disposing metal materials in a symmetrical structure.

The motor structure 300 according to the disclosure includes the metal member 350 lighter than the counter weight is included, minimizing the vibration force reduction due to placement of the metal materials of the rotatable part 302 in the symmetrical structure.

The motor structure 300 according to the disclosure may dispose the metal member 350 in an area opposite to the counter weight disposed in the asymmetric structure to mitigate radiation deviation due to the motor structure 300, maintaining stable antenna radiation performance Because it is stacked with the antenna.

Effects obtainable from the disclosure are not limited to the above-mentioned effects, and other effects not mentioned may be clearly understood by those skilled in the art from the following description.

### [Description of reference numbers]

101 : Electronic device
300: Motor structure
301 : Fixed part
302 : Rotatable part
330 : Counter weight
340 : Injection-molded member
350 : Metal member

## Claims

1. A motor structure (300), comprising:
a shaft defining a rotation axis;
a ring-shaped magnet (316) including an opening through which the shaft passes; and
a rotatable part (302) configured to rotate about the shaft, and including a first area (3021) and a second area (3022) divided with respect to a reference line (B) intersecting the rotation axis,
wherein the rotatable part (302) includes:
a coil assembly configured to generate an electromagnetic force through interaction with the magnet (316);
a counter weight (330) positioned in the first area (3021) and having a first weight; and
a metal member (350) at least partially positioned in the second area (3022) and having a second weight smaller than the first weight.

2. The motor structure of claim 1,
wherein the rotating part is configured to generate a vibration when rotating as the first area and the second area differ in weight.

3. The motor structure of claim 1 or 2, wherein the rotatable part further includes:
an upper substrate electrically connected to the coil assembly;
a bearing supporting the shaft; and
an injection-molded member contacting the counter weight.

4. The motor structure of claim 3, wherein the injection-molded member includes:
a first injection-molded portion disposed in the first area; and
a second injection-molded portion extending from the first injection-molded portion and disposed in the second area, and
wherein a weight of the second injection-molded portion is smaller than a weight of the first injection-molded portion.

5. The motor structure of claim 4,
wherein a height of the second injection-molded portion is smaller than a height of the first injection-molded portion.

6. The motor structure of claim 3,
wherein the metal member is disposed on the injection-molded member.

7. The motor structure of claim 3,
wherein the metal member covers an entire surface facing an upper direction of the injection-molded member.

8. The motor structure of claim 3,
wherein the metal member covers a portion of a surface facing an upper direction of the injection-molded member.

9. The motor structure of any one of claims 1 to 8,
wherein the metal member includes a conductive paint.

10. The motor structure of any one of claims 1 to 8,
wherein the metal member is an LDS resin.

11. The motor structure of claim 3,
wherein the metal member is integrally formed with the injection-molded member and is a copper sheet.

12. The motor structure of claim 3,
wherein the metal member is disposed between the upper substrate and the injection-molded member and is attached onto the upper substrate.

13. An electronic device, comprising:
a housing including a conductive portion; and
a motor structure disposed in the housing and disposed to at least partially overlap the conductive portion,
wherein the motor structure is a motor structure according to any one of claims 1 to 12.
